Europäisches Patentamt

European Patent Office

Office européen des brevets

(11) Publication number: **0 293 345**
**A2**

(12) **EUROPEAN PATENT APPLICATION**

(21) Application number: 88830242.9

(22) Date of filing: 26.05.88

(51) Int. Cl.⁴: **B 26 F 3/00**

(30) Priority: 29.05.87 IT 2072687

(43) Date of publication of application:
30.11.88 Bulletin 88/48

(84) Designated Contracting States:
AT BE CH DE ES FR GB GR IT LI LU NL SE

(71) Applicant: BE.CO ENGINEERING & MANUFACTURING
S.r.l.
Via Baldo degli Ubaldi, 14
I-20156 Milano (IT)

(72) Inventor: Bettazza, Silvio
Via Baldo degli Ubaldi, 14
I-20156 Milano (IT)

(74) Representative: Minoja, Fabrizio
Studio Consulenza Brevettuale Via Rossini, 8
I-20122 Milano (IT)

(54) Process and equipment for tyre radial sections.

(57) A process for sectioning tyres, in particular for cutting radial sections having a prefixed width, with the help of a jet, made up of water at a high pressure plus abrasive material (abrasive jet), issued from a nozzle (2) placed on the inside of the tyre, the axis (Y) of the abrasive jet is kept constant during cutting, while the tyre rotates at variable speeds around an axis (X) perpendicular to the axis (Y) of the jet, the nozzle (2) can be moved on its own axis (Y) and in the direction of the mentioned axis (X).

And equipment to carry out the above mentioned process.

EP 0 293 345 A2

Bundesdruckerei Berlin

**Description**

## PROCESS AND EQUIPMENT FOR CAR TYRE RADIAL SECTIONS

The subject of the present invention is a process for cutting radial sections of tyres, particularly used in carrying out quality controls. The invention also concerns the equipment for carrying out the above mentioned process.

As it is well-known, for obvious security reasons, the industries which manufacture tyres must carry out strict periodic quality checks on samples of each type of tyre produced.

Such checks require that a slice or a radial section of the tyre must be cut.

At the present moment, tyres are sectioned with the help of small saws or cutters which inevitably cause a rough effect of the cut and scratched edges of the cuts, which can distort the results of the tests.

It often happens that during cutting, crevices appear within the tyre, mainly when passing areas in which the materials have different resistances, for example, areas containing an elastomer mix or areas with steel wires on the circumference of the tyre. These crevices can be interpreted as a fault in the tyre, and therefore the cut must be carried out on another tyre, and it often happens that this operation has to be repeated several times in order to obtain an acceptable section.

This results in a large waste of time and unnecessary waste of tyres which have high production costs, especially in the case of the larger tyres.

Therefore the problem arises of how to carry out a radial cut in the tyre without damaging the same while cutting, and obtaining a cut surface that is as smooth as possible.

The scope of the invention is in fact, that of solving this technical problem and eliminating the inconveniences mentioned above.

This scope is attained with the process, according to the invention, that forsees the possibility of cutting the tyre with the help of a jet of water at a high pressure mixed with abrasive material.

The water jet and the abrasive are preferably issued from a nozzle on the inside of the tyre according to a fixed axis, and the tyre is turned around, making it rotate around an axis that is perpendicular to the nozzle in order to carry out the first cut. The nozzle is then shifted according to the rotating axis of the tyre in the same proportion as the width of the section that has to be cut, and the tyre is rotated in the opposite direction compared to the first time, in order to carry out the second cut.

The rotating speed of the tyre is regulated according to its width, and according to the different resistences of the various parts to the water plus abrasive jet, when the nozzle is regulated on the axis in order to constantly maintain the same distance from the inner surface of the tyre, which normally does not exceed 10 mms.

The water is fed at a pressure of 2000 to 4000 atm. and the abrasive material is preferably composed of dry and smooth particles, having grains varying from 0.01 to 0.5mms and Mohs hardness that is greater than the hardness of the materials to be cut.

With this process, in accordance with the invention, it is possible to obtain perfectly smooth cut surfaces, that are practically free from any rough or scratchy effect, even in the areas where the cut passed through strata with very different resistances.

The equipment for cutting sections of tyres according to the invention, in its favourite form, includes a table in order to support the tyre, mounted on a fixed framework in order to have the possibility to rotate approximately 300° around a horizontal rotating axis. A rigid arm is fixed to this table. It is tilted upwards and it has a cylinder shaped head. Its axis coincides with the rotating axis of the table in order to place it within the tyre that has to be sectioned.

The nozzle which concentrates the water and the abrasive is placed on the inner rim of the cylinder shaped head which has a channel around its circumference, for a 300° arc, for the jet outlet.

The nozzle's axis is maintained in a relatively fixed position compared to the rotating head, thus making it rotate within the mentioned head, in the opposite direction of the same.

The nozzle can also move on its own axis and in the direction of the rotating axis of the table.

Finally, devices are foreseen in order to facilitate the positioning of the tyre and in order to keep it well fixed during the cutting operation.

Other characteristics of the invention shall be described better in the detailed description below, which only refers to an example and therefore is not limiting with regard to production. The invention is illustrated in the attached drawings, in which:

> Figure 1 is the front view, the plan of the equipment for cutting radial sections of tyres according to the invention in its perfect form of construction.

> Figure 2, is a cross section, as it appears along line II-II of figure 1

> Figure 3 is a partial exploded view of the equipment illustrated in figures 1 & 2

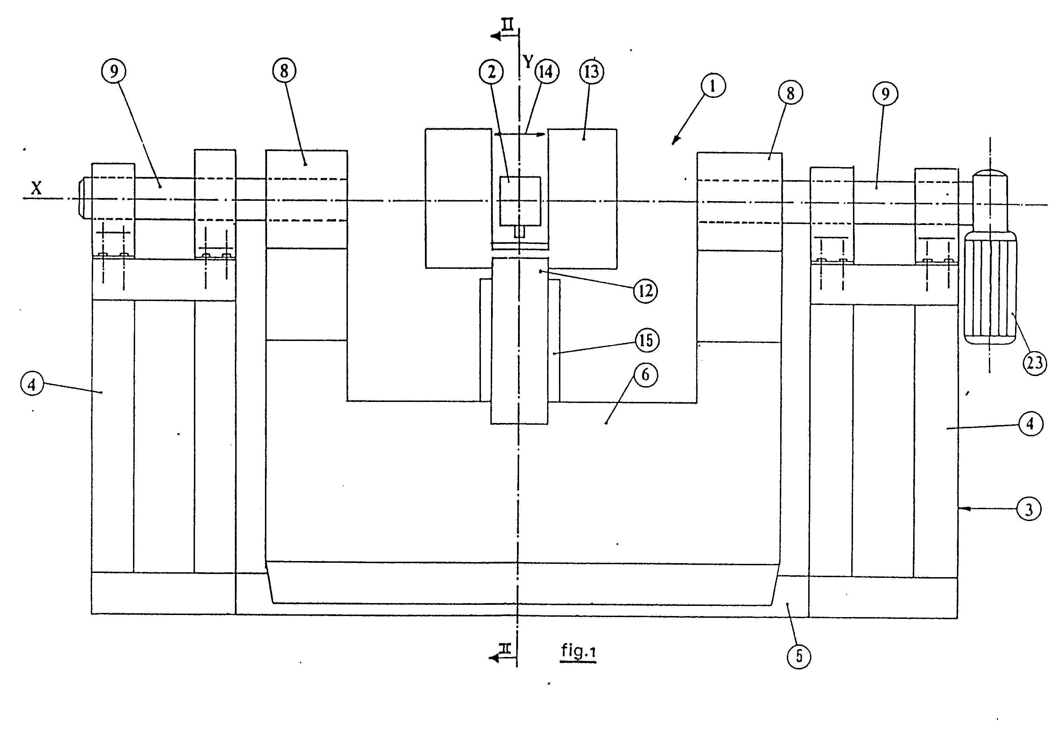

With reference to these figures, figure 1 illustrates, as a whole, an equipment for cutting radial sections in tyres, according to the invention for cutting using a jet of water at a high pressure (200-400 atm.) along with abrasive material, for example dry, smooth particles with grains having a size varying between 0.01 and 0.5mm, with Mohs hardness that is greater then the hardness of the material to be cut.

A detailed description shall not be made herein of the the formation technique of the water and abrasive jet, which hereonwards shall be called the abrasive jet as it is already well known, and is not the topic of the invention.

In the attached figures, a plan has been drawn only of the concentration nozzle for the abrasive jet, indicated with reference number 2, whose position and whose mode of operation shall be described in greater detail later on.

It must be noted that the abrasive jet is very destructive, even after the material has been cut, therefore it must be put off before it might hit for example the parts of the structure of the cutting equipment itself.

Even though technically it is possible to rotate the concentration nozzle of the jet during cutting, while keeping the tyre in a fixed position, it would be extremely difficult, if not even impossible to provide the mobile structure for damping that could follow the jet, without interfering with the structure of the machine.

However in the equipment according to the invention, it has been preferred to keep the axis of nozzle 2 fixed, and to make the tyre rotate.

Having stated the above premises, we shall continue with the description of equipment 1.

This equipment includes a fixed framework 3, composed of two vertical shafts of a substantially triangular shape 5.

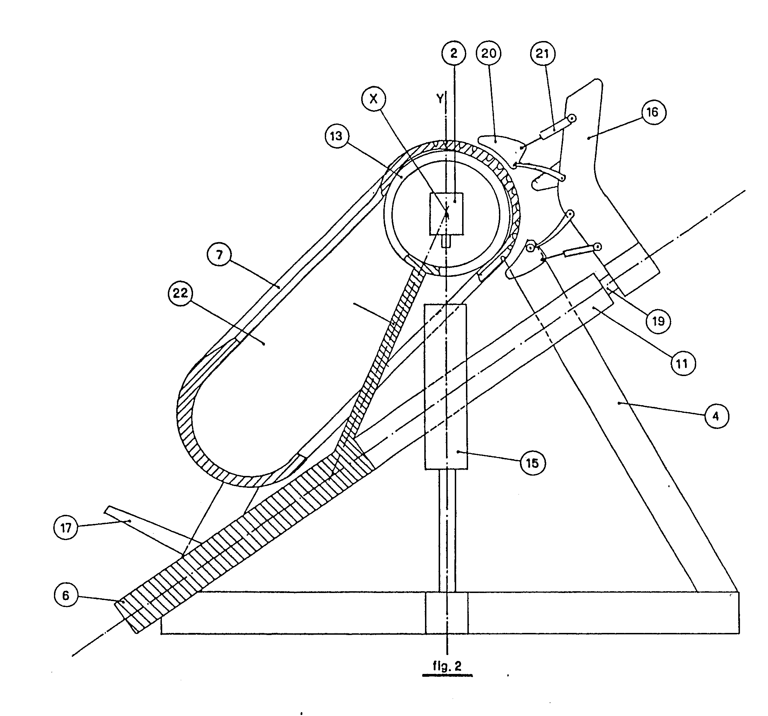

To the framework 3, a flat table 6 is fixed which supports the tyre 7 (figure 2). In particular, the table 6, bears, on the rear, (refer to the attached drawings) two side shafts on each opposite side 8, in perpendicular position with respect to the table surface, each one bearing a horizontal shaft 9 pointing outwards from table 6, and which are inserted into a corresponding circular lodging on top of each respective vertical shaft.

Obviously the two shafts 9 are fixed on a common axis indicated with letter x.

Table 6 presents, in the center part, a rectangular cut, 11, that is open from behind, above which is an arm 12 that protrudes out of the surface of the table. At the free end of the arm 12, a cylinder shaped head 13 is foreseen, which can be replaced if required, and which can be positioned within the tyre 7, as described in more detail later. The axis of the cylinder shaped head 13, coincides with axis X of the shafts 9, i.e. with the rotating axis of the table 6.

In the middle of the cylinder shaped head 13, a slit around the circumference 14, is foreseen, which covers an arc equal to 300°, in order to enable the output of the abrasive jet issued by nozzle 2 that is placed on the inside of head 13.

The nozzle is mounted inside the head 13, so that its axis Y, which coincides with the direction of the abrasive jet, shall remain fixed during the cut, and particularly in a perfectly upright position, with the abrasive jet orieted from up downwards. However, for reasons that we shall understand better later, nozzle 2 is mounted on a rotating bracket inside the cylinder-shaped head 13, and can be shifted in the directions of axes X and Y.

Below nozzle 2, and on the same axis as the same, is positioned the tank 15 that serves to put off the abrasive jet, i.e. to dissipate the strong kinetic energy that the jet still has after the cutting process.

Tank 15 crosses the cut 11 of table 6, and is controlled by hydraulic and pneumatic acutators, it also moves in the direction of axes X and Y to follow the movement of nozzle 2 and always keeps at the same distance below the latter.

Tank 15 in this particular case is partly filled with balls which, with the action of the jet, have an ascending turbulent motion, that absorbs the kinetic energy of the jet, that once put off, is let out of a hole on the upper part of the tank and is sent into the exhaust or eventually to a recycling device for the abrasive material.

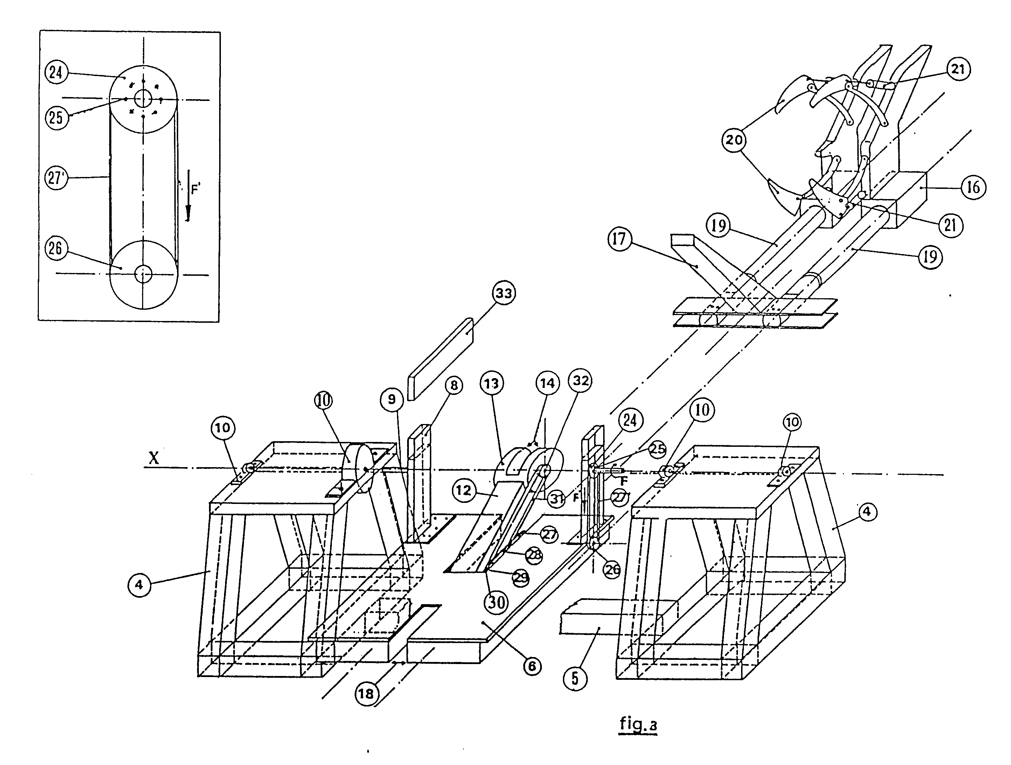

In order to position and block the tyre to be sectioned, a device built into the same block as the table 6 is utilized, indicated as a whole with reference number 16 in the exploded view in figure 3.

In its lower part, device 16 has an inclined arm 17 that can be shifted closer and further, with the help of a couple of parallel beams 19, placed under the table 6, and moved by respective hydraulic or pneumatic actuators, in a rectangular shaft 18, open on the front, and foreseen in table 6, on the opposite side and on the same axis as cut 11.

From the side opposite arm 17, the positioning and blocking device 16 has clamps 20 which are also moved by their respective hydraulic or pneumatic actuators 21, to lock the part of the tyre near to the area to be cut.

The tyre 7 is placed on the table 6 and pulled upwards by arm 17, so that the cylinder-shaped head 13; shall be positioned in the inner ring chamber 22 of the tyre. Depending on the different sizes of the tyres, interchangeable cylinder-shaped heads of different diameters can be provided, if necessary.

Once the head 13 is placed on the inner part of tyre 7, the actuators 21 are activated in order to lock the clamps 20 that block the tyre in a fixed position.

Therefore, starting from the position in figure 2, the first cut can be made, by making table 6 rotate approximately 300° around the rotation axis X.

For this scope, at least one of the two shafts 9 (the one on the right, when refering to the attached figures), is made to rotate by motor 23, with a reduction gear system, and the possibility to vary the rotating speed of the shaft 9 and also of table 6.

The rotating speed of table 6 is varied, bearing in mind the different widths of the different areas of the tyre 7 that have to be cut and the different resistances to the cuts.

This rotating speed is guaranteed by a control unit (not illustrated), with which the equipment 1 is provided.

In order to avoid that the nozzle 2 rotates together with the cylinder-shaped head 13, in which it is positioned, during the rotation of table 6, it is, as previously mentioned, mounted on a bracket that rotates in the opposite direction of the head 13, so that the axis Y of the nozzle 2, remains fixed during the cutting process. This is obtained vide a system of pulleys and belts that are activated by the motor-powered shaft 9.

In particular, at a base of shaft 9, is a pulley 24, that is mounted on bearings 25, coupled in the ratio 1:1 with a corresponding pulley 26, on table 6, with belt 27. The pulley 26 is mounted at the end of a shaft placed under table 6 and which, on the other end which protrudes from the cut 11, has another pulley 27 coupled to it vide belt 28, and always in the ratio 1:1, also to pulley 29 which is foreseen near to the base of arm 12. On the same axis as pulley 29 another pulley 30 is splined, which is partially covered by the former one in the exploded view illustrated in Figure 3, which is coupled with a belt 31 in the ratio 1:1 to pulley 32 that is fixed to the rotating bracket that carries nozzle 2.

In this way, when shaft 9 rotates for example in the direction of arrow F in Figure 3, in order to make the table 6 rise, the presence of the bearing 25 between shaft 9 and pulley 24 enables a related movement between pulley 24 and shaft 9, that corresponds to a rotation of pulley 24 in the opposite direction of shaft 9.

However all the pulleys shall rotate in the opposite direction of arrow F, and with at least pulleys 30 and 32 having the same diameter as shaft 9, the rotating head bearing nozzle 2 shall rotate in the opposite direction and at the same speed as shaft 9, so that axis Y of the nozzle remains fixed during cutting.

Actually pulley 24, borne by bearing 25, remains in a fixed position during the rotation of shaft 9, while its contact surface with belt 27′ varies, due to the rotation of table 6. This corresponds to a movement of belt 27′ in the direction of the arrows F′ (Figure 3) provoking the rotation of pulleys 26, 27, 29, 30 and 32 in the same direction as mentioned before.

Since the ring cavity 22 of the tyre is obviously not a perfectly circular section, and since it is extremely opportune, for a good quality cut, that the nozzle 2 be kept constantly at the same distance from the inner surface of the tyre (usually not more than 10mm), nozzle 2 is also supported in an elastic manner in the same direction as its own axis Y, so that it maintains the distance set, with the help of a continuous contact feeler on the inner surface of the type 7.

Once the first cut is made, table 6 appears upside down, i.e.; rotated approximately 300° around axis X, compared to the position illustrated in Figure 2.

Nozzle 2 is then shifted in the direction of the rotating axis X, with the help of hydraulic or pneumatic actuators which have not been illustrated, of a fixed size, and corresponding to the width of the radial section of the tyre that has to be cut. Maximum shifting capacity of the nozzle in the direction of axis X is dertermined by the width of the slit 14, that is foreseen in the cylinder-shaped head 13.

The second cut is then carried out by rotating table 6 in the opposite direction compared to the first cut, until it returns to the position illustrated in figure 2.

The tyre whose section has been cut, is then freed by opening the clamps 20.

It must be noted, that to facilitate the rotation of table 6, counterweights 33 are foreseen, and are composed for example of rectangular blocks (one is illustrated in figure 3), that are fixed onto the free ends of the shafts 8.

The sections of the tyres, obtained with the process and the equipment, according to the invention, have perfectly smooth cut surfaces, of a quality that is greatly superior to the traditional types of cuts, and with practically no waste due to non acceptable cuts.

Naturally the invention is not limited to the particular form described above, and illustrated in the drawings attached, but it can be modified in many parts without exceeding the limits of the invention itself.

## Claims

1. Process for cutting sections of tyres and in particular radial sections of a prefixed width, characterized by the fact that a jet of water at a high pressure plus abrasive material (abrasive jet) is used for the cut.

2. Process according to claim 1, in which the pressure of the water is approximately 2000-4000 atmospheres and the abrasive material is composed of dry and smooth particles, having grains ranging between 0.01 and 0.5 mm in size and a Mohs hardness that is greater than the material to be cut.

3. Process according to claims 1 and 2, characterized by the fact that the abrasive jet is issued at a constant distance from the tyre, preferably not greater than 10mm.

4. Process according to any of the claims from 1 to 3, characterized by the fact that the abrasive jet hits the tyre on the inner surface.

5. Process according to any of the claims from 1 to 4, characterized by the fact that the direction of the jet is kept fixed during the cutting process, and the tyre is rotated approximately 300° around an axis (X) that is perpendicular to the axis (Y) of the jet.

6. Process according to claim 5, characterized by the fact that the rotating speed of the tyre around the axis (X) is variable.

7. Process according to any one of the previous claims, characterized by the fact that the abrasive jet is moved in the direction of the rotating axis (X), between the two cuts, for a distance that is equal to the width of the radial section that must be cut.

8. The equipment for cutting sections of tyres, in particular for cutting radial sections of a prefixed width, with a jet of water at a high pressure plus abrasive material (abrasive jet), in accordance with any of the claims from 4 to 7, and characterized by the fact that it requires a flat table (6) to support the tyre (7), mounted on two lateral coaxial shafts (9) onto a fixed framework (3), so that it can rotate on an arc of approximately 300° around a common horizontal axis (X) of the aforesaid shafts (9), from the table (6) protrudes an arm (12) that bears a cylinder-shaped head (13) and its axis coincides with axis (X) of the table rotation, in order to position the same within the ring chamber (22) of the tyre (7), the abrasive jet is issued from a concentration nozzle (2) mounted on a rotating support inside the head (13) which has a slit around its circumference (14) that covers an arc of approximately 300°, to issue the abrasive jet, the nozzle (2) can also shift along its own axis (Y) and along the mentioned rotating axis (X) of the table (6), different methods have also been foreseen to put off the abrasive jet and to position and block the tyre to the table (6).

9. Equipment according to claim 8, characterized by the fact that, during cutting, at least one of the mentioned shafts (9) is motor-powered at a variable speed with a gear reduction system, the rotating support of the nozzle (2) rotates at the same speed but in the opposite direction of the shafts (9), to that the axis (Y) of the nozzle remains in a fixed position, preferably in a vertical position, with the jet pointing downward.

10. Equipment according to claim 9, characterized by the fact that the rotating support of the nozzle (2) is made to rotate by a system of belts and pulleys (24, 26, 27', 27, 28, 29, 30, 31, 32, the pulley (24) is mounted on the motor-powered shaft (9) with a bearing interposed in between.

11. Equipment according to any one of the claims from 8 to 10, characterized by the fact that the nozzle (2) is borne in an elastic manner in the direction of its own axis (Y) and moves on this axis together with a feeler which, during the cutting process, is constantly in contact with the inner surface of the tyre.

12. Equipment according to any one of the claims from 8 to 11, characterized by the fact that the nozzle (2), between one cut and the next, is shifted along the rotation axis (X) of the table (6) by a hydraulic or pneumatic actuator, for a distance that is equal to the required width of the section to be cut.

13. Equipment according to any one of the claims from 9 to 12, characterized by the fact that the cylinder-shaped head (13) can be interchanged.

14. Equipment according to any one of the claims from 8 to 13, characterized by the fact that the putting off device of the abrasive jet is composed of a tank (15) that is partially filled with balls, placed on the axis and below the nozzle (2), in a slit (11) carved in the table (6), this tank (15) is moved by hydraulic or pneumatic actuators in order to follow the movement of the nozzle (2), along the axes (X, Y) so that its opening is always at the same distance from the nozzle.

15. Equipment according to any one of the claims from 8 to 14, characterized by the fact the mentioned devices used for positioning and blocking the tyre (7) are composed of a device (16) that is attached to the table (6), and that has a tilted arm (17) that can slide in a sit (18) in the table (6) and is controlled by pneumatic or hydraulic actuators, and it moves the tyre over the head (13), and with at least a couple of clamps (20), controlled by their own hydraulic or pneumatic actuators (21) which block the tyre near to the head (13).

16. Equipment according to any one of the claims from 8 to 15, characterized by the fact that on the opposite side of the table (6), compared to the rotation axis (X), counter-

weights are foreseen.

0293345

fig.1

fig. 2

fig.3